# DEMANDE DE BREVET EUROPEEN

(11) **EP 1 645 799 A1**
(43) Date de publication de la demande: **12.04.2006**
(21) Numéro de dépôt: 05291993.3
(22) Date de dépôt: 26.09.2005
(51) Int. Cl.: F21V 15/04

(54) **Projecteur à amortissement d'énergie pour véhicule automobile et procédé pour absorber l'énergie provenant du choc piéton**

(30) Priorité: 05.10.2004 FR 0410508
(71) Demandeur: VALEO VISION, 93012 Bobigny Cédex (FR)
(72) Inventeur: Arlon, Philippe, 77330 Ozoir la Ferrière (FR)

(57) **Abrégé**

L'invention concerne un projecteur notamment de type elliptique pour véhicule automobile, comportant :
- un boîtier (3) fixé sur le véhicule,
- une glace de protection (4) fermant le boîtier (3),
- un module optique (10) comportant un réflecteur (5), une lentille (6) et un intermédiaire (7) fixé au réflecteur et supportant la lentille, ladite lentille et ledit intermédiaire formant un module rigide (15), et
- des moyens (9, 14, 16) pour absorber au moins partiellement une énergie produite lors d'un choc piéton, par un déplacement d'une partie au moins du module optique (10).

L'invention concerne également un procédé pour absorber au moins partiellement de l'énergie provenant d'un impact entre un piéton et un projecteur de véhicule.

## Description

### Domaine de l'invention

L'invention concerne un projecteur, notamment de type elliptique, pour véhicule automobile, adapté pour offrir, au piéton, une sécurité renforcée en cas de choc piéton, en absorbant une partie de l'énergie produite par le choc. En particulier, l'invention propose un projecteur dans lequel les éléments rigides du projecteur se déplacent afin de ne pas être sur la trajectoire d'impact du piéton avec le projecteur.

L'invention concerne également un procédé permettant d'absorber successivement une partie de l'énergie provenant de l'impact entre un piéton et le projecteur du véhicule pour minimiser l'effet du choc sur le piéton.

L'invention trouve des applications dans le domaine de l'automobile et, en particulier, dans le domaine des projecteurs pour véhicule automobile, en relation avec la norme européenne concernant la sécurité des piétons.

### Etat de la technique

Il existe, dans le domaine des projecteurs pour véhicule automobile, une norme européenne visant à protéger le piéton lors d'un choc entre un piéton et un véhicule et, en particulier, le projecteur situé en face avant du véhicule. Cette norme a pour but d'augmenter la sécurité du piéton en cas d'impact avec un projecteur de véhicule afin de limiter les effets du choc sur le piéton.

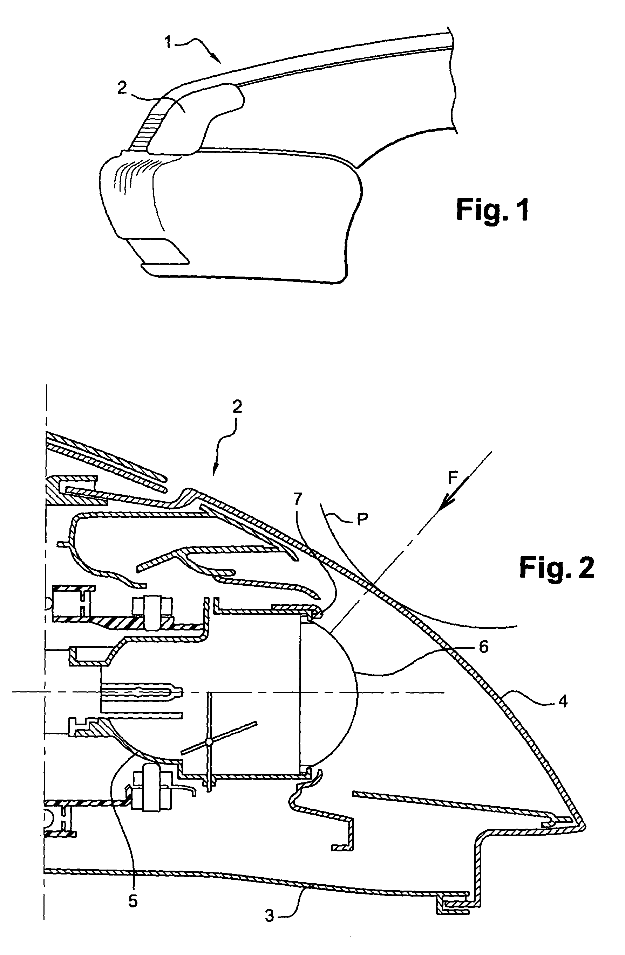

Sur la figure 1, on a représenté, selon une vue de côté, la partie avant d'un véhicule automobile 1 pourvu d'un projecteur 2, par exemple de type elliptique. En cas de choc piéton, c'est-à-dire en cas de choc entre un piéton et le véhicule, la tête du piéton, en particulier lorsque le piéton est un enfant, peut heurter le projecteur et casser la glace de protection du projecteur. Or, derrière cette glace de protection, le projecteur comporte des éléments rigides qui forment, ensemble, un module rigide. Ce module rigide forme un point potentiellement dur, et donc dangereux, pour la tête du piéton.

Sur la figure 2, on a représenté un exemple de projecteur 2 de type elliptique. Ce projecteur elliptique 2 comporte un boîtier 3 fixé sur le véhicule et fermé par une glace de protection 4. Il comporte aussi un module optique comprenant un réflecteur 5, généralement réalisé dans un matériau métallique, une lentille 6, généralement réalisée en verre, et un support intermédiaire 7, généralement réalisé en métal. Ce support intermédiaire, appelé plus simplement intermédiaire, assure une liaison mécanique entre le réflecteur 5 et la lentille 6. On comprend que la lentille 6 en verre et l'intermédiaire 7 en métal sont des éléments rigides, potentiellement très dangereux pour le piéton, et en particulier pour la tête du piéton, en cas de choc.

On a représenté, sur la figure 2, par un arc de cercle P, la tête d'un piéton heurtant avec une force F le projecteur 2 du véhicule. La trajectoire d'impact piéton/projecteur (représentée en pointillés sur la figure 2) montre que, en cas de choc piéton, le premier élément rencontré par le piéton est la glace de protection 4 puis, si la glace de protection se casse, la lentille 6 et l'intermédiaire 7. Le piéton se heurte alors à des éléments rigides et indéformables. En conséquence, c'est le piéton lui-même qui absorbe l'énergie produite par le choc.

### Exposé de l'invention

L'invention a justement pour but de remédier aux inconvénients des dispositifs décrits précédemment. A cette fin, l'invention propose un projecteur, par exemple de type elliptique, dans lequel une partie au moins de l'énergie provenant de ce choc est absorbée par le projecteur. Pour cela, l'invention propose un projecteur dans lequel au moins une partie du module optique peut être déplacée de façon à ce que le module rigide ne soit pas sur la trajectoire d'impact du piéton sur le projecteur.

De façon plus précise, l'invention concerne un projecteur de type elliptique pour véhicule automobile, comportant :
- un boîtier fixé sur le véhicule,
- une glace de protection fermant le boîtier,
- un module optique comportant un réflecteur, une lentille et un intermédiaire fixé au réflecteur et supportant la lentille, ladite lentille et ledit intermédiaire formant un module,
caractérisé en ce qu'il comporte des moyens pour absorber au moins partiellement une énergie produite lors d'un choc piéton, par un déplacement d'une partie au moins du module optique.

L'invention peut comporter également une ou plusieurs des caractéristiques suivantes :
- les moyens d'absorption d'énergie comportent un correcteur de position monté entre le boîtier et le module optique pour assurer un déplacement du module optique par rapport au boîtier ;
- le correcteur de position comporte une tige de réglage fixe par rapport au module optique et mobile par rapport au boîtier, cette tige de réglage pouvant être escamotable ;
- les moyens d'absorption d'énergie comportent au moins un élément de liaison monté entre l'intermédiaire et le réflecteur et assurant un déplacement du module rigide par rapport au réflecteur ; cet élément de liaison étant déformable ou cassable ;
- l'élément de liaison est constitué par l'intermédiaire lui-même ;
- l'intermédiaire est cassable au niveau de sa fixation au réflecteur ;
- les moyens d'absorption d'énergie comportent une mousse à absorption d'énergie placée au moins sous le module ;

L'invention concerne également un procédé permettant d'absorber au moins partiellement l'énergie provenant d'un impact entre un piéton et un projecteur de véhicule. Ce procédé se caractérise par les opérations suivantes :
- absorption d'une partie de l'énergie par déformation d'une glace de protection du projecteur,
- absorption d'une partie de l'énergie par déplacement d'au moins une partie d'un module optique dans le projecteur, et
- absorption d'une partie de l'énergie au moyen d'une mousse absorbante.

L'invention concerne également un véhicule automobile comportant un projecteur tel que décrit précédemment.

### Brève description des dessins

La figure 1, déjà décrite, représente schématiquement un véhicule équipé d'un projecteur de type elliptique.
La figure 2, déjà décrite, représente une vue en coupe d'un projecteur de type elliptique classique.
Les figures 3 et 4 représentent une vue en coupe d'un projecteur selon un premier mode de réalisation de l'invention.
La figure 5 représente une vue en coupe d'un projecteur selon un second mode de réalisation de l'invention.
La figure 6 représente une vue en coupe d'un projecteur selon un troisième mode de réalisation de l'invention.
La figure 7 représente une vue en coupe d'un projecteur combinant le premier et le troisième modes de réalisation de l'invention.
La figure 8 représente un exemple d'une courbe de l'énergie produite par l'impact d'un piéton sur un projecteur selon l'invention.

### Description détaillée de modes de réalisation de l'invention

L'invention propose un projecteur, notamment de type elliptique, adapté pour absorber une partie au moins de l'énergie produite lors d'un choc entre un piéton et un véhicule sur lequel est monté ce projecteur. Autrement dit, l'invention propose un projecteur permettant une dissipation de l'énergie provenant d'un impact piéton/véhicule, la plus régulière possible et la plus lente possible afin de minimiser la quantité d'énergie absorbée par le piéton. Pour cela, le projecteur de l'invention comporte des moyens permettant de déplacer au moins une partie du module optique à l'intérieur du projecteur, en cas de choc piéton.

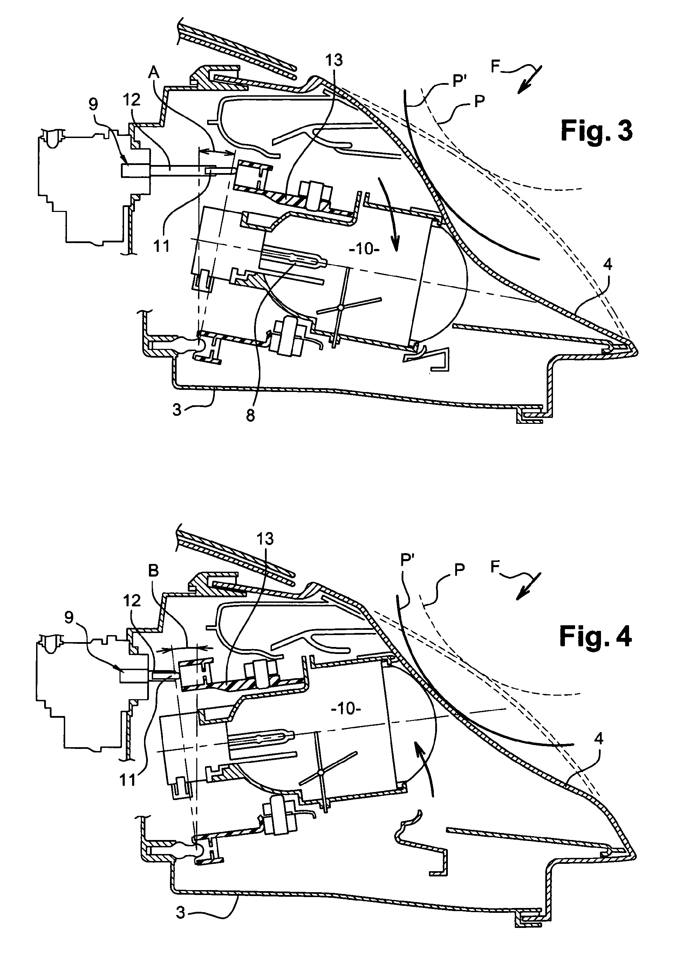

Selon un premier mode de réalisation de l'invention, ces moyens consistent en un correcteur de position assurant un déplacement du module optique à l'intérieur du projecteur. Ce mode de réalisation est représenté sur les figures 3 et 4. Plus précisément, la figure 3 représente le projecteur dans un premier exemple de position du correcteur et la figure 4 représente ce même projecteur dans un second exemple de position du correcteur.

La figure 3 représente un projecteur de type elliptique selon l'invention. Ce projecteur comporte un réflecteur 5, une lentille 6 et un intermédiaire 7, formant ensemble un module optique 10. A l'intérieur du réflecteur 5, une source lumineuse 8 assure l'émission d'un faisceau lumineux diffusé par le système optique 10.

Selon ce premier mode de réalisation, le projecteur 2 comporte un correcteur 9. Ce correcteur 9 est fixé, d'une part, sur le boîtier 3 du projecteur et, d'autre part, sur le module optique 10. Ce correcteur 9 est mobile, permettant ainsi une mobilité du module optique 10 à l'intérieur du projecteur. Classiquement, ce correcteur 9 a pour rôle d'adapter la position du module optique aux conditions de circulation (par exemple charge du véhicule, freinage du véhicule, etc.) afin d'obtenir la direction de faisceau lumineux souhaitée. Dans l'invention, le correcteur 9 a pour rôle de permettre un déplacement vertical ou horizontal du module optique 10, ce déplacement assurant une absorption au moins partielle de l'énergie produite lors de l'impact piéton/véhicule.

Sur la figure 3, on a représenté par des arcs de cercle P et P' la tête d'un piéton lors d'un choc piéton projecteur. L'arc de cercle en pointillés P représente la tête du piéton au début de l'impact avec le projecteur. L'arc de cercle en traits épais P' représente la tête du piéton après que la glace de protection 4 se soit brisée. En effet, la glace de protection 4 du projecteur étant réalisée dans un matériau relativement souple, ladite glace de protection se déforme sensiblement, avant de se briser. Cette déformation permet d'absorber une partie de l'énergie de l'impact. Le déplacement du module optique 10 permet ensuite, une fois la glace de protection brisée, d'absorber encore une partie de l'énergie de l'impact. En effet, lorsque le piéton P' entre en contact avec le module optique 10, et notamment la lentille 6 du module 10, la force F de l'impact se trouve diminuée par le fait que le module optique se déplace en même temps que le piéton P'. Le module optique 10 absorbe ainsi une partie de l'énergie de l'impact.

Selon ce premier mode de réalisation, le déplacement du module optique 10 est obtenu au moyen du correcteur 9. Pour cela, le correcteur 9 comporte une tige de réglage 11 fixée, par l'intermédiaire d'un support de module 13, sur le module optique 10. Cette tige de réglage 11 est escamotable. En d'autres termes, la tige de réglage 11 est mobile à l'intérieur d'une goulotte 12, fixée sur le boîtier 3. Ainsi, la tige de réglage 11 peut entrer et sortir de la goulotte 12, avec une longueur plus ou moins grande, de façon à permettre le déplacement du module optique à l'intérieur du projecteur.

De préférence, la tige mobile est montée rotative sur le support de module 13 pour permettre un déplacement en rotation du module optique 10. De cette façon, le module optique 10 est mobile, à l'intérieur du projecteur, horizontalement et verticalement.

Sur la figure 3, on a représenté le projecteur de l'invention, pendant un choc piéton, dans le cas où la tige de réglage 11 du correcteur 9 est en position «course sortie », c'est-à-dire lorsqu'elle que la tige 11 est sortie de la goulotte 12. Le module optique 10 est alors déplacé vers le bas. Un angle A représente, sur la figure 3, le déplacement angulaire subi par le module optique 10 lors de l'impact avec le piéton P.

Sur la figure 4, on a représenté le projecteur de l'invention, pendant un choc piéton, dans le cas où la tige de réglage 11 du correcteur 9 est en position «course rentrée », c'est-à-dire lorsqu'elle que la tige 11 est escamotée dans la goulotte 12. Le module optique 10 est alors déplacé vers le haut. Un angle B représente, sur la figure 4, le déplacement angulaire subit par le module optique 10 lors de l'impact avec le piéton P.

Selon une première variante de l'invention, l'escamotage et la sortie de la tige de réglage 11 sont commandés par un système de ressort qui se compresse ou se détend.

Selon une seconde variante de l'invention, le correcteur 9 est commandé par au moins un moteur. L'escamotage ou la sortie de la tige de réglage 11 est donc commandée par ce moteur. Plus précisément, au moment de l'impact, une impulsion électrique est transmise au moteur qui déplace la tige de réglage 11 de sa position initiale vers une position finale prédéterminée. Ce déplacement de la tige de réglage 11 entraîne le déplacement du module optique. Comme le déplacement du module optique est contrôlé par le moteur, il assure un amortissement de l'impact. Autrement dit, il diminue la force d'impact, ce qui entraîne une diminution de l'énergie absorbée par le piéton.

Le correcteur permet donc de dériver l'énergie de l'impact en écartant le module optique du centre de l'impact. C'est donc le module optique et le correcteur qui absorbe une partie de l'énergie produite par le choc piéton.

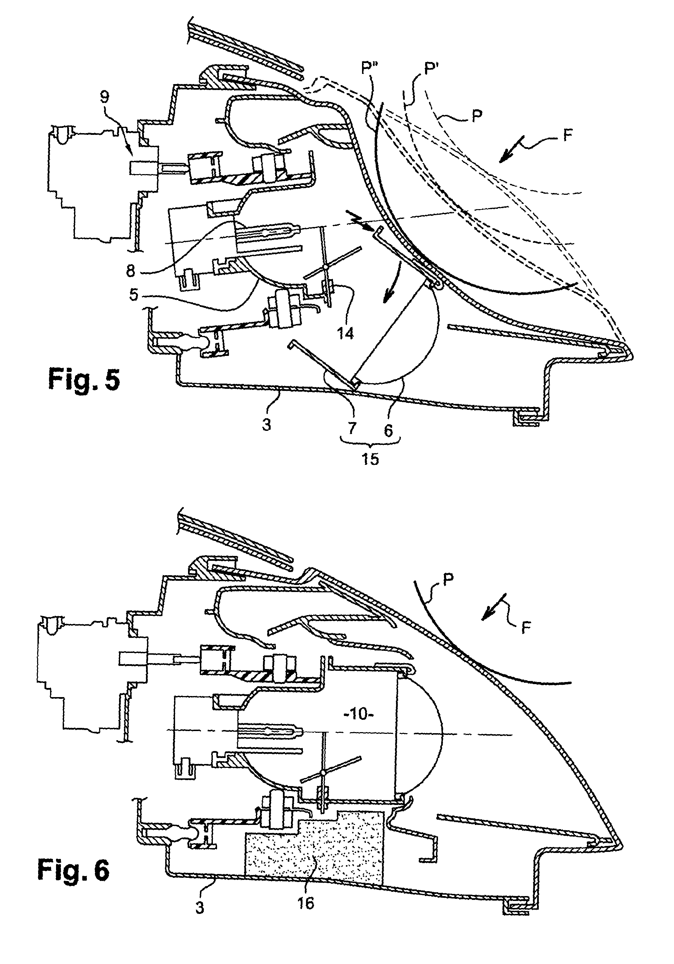

Selon un second mode de réalisation de l'invention, les moyens pour déplacer au moins une partie du module optique consistent en un élément de liaison fixé entre l'intermédiaire 7 et le réflecteur 5. Cet élément de liaison assure, en cas de choc piéton, un déplacement d'une partie du module optique à l'intérieur du projecteur. Ce mode de réalisation est représenté sur la figure 5.

Selon ce second mode de réalisation de l'invention, l'intermédiaire 7 est fixé sur le réflecteur 5 par l'intermédiaire d'un élément de liaison 14. De cette façon, le module optique est divisé en deux parties :
- le réflecteur 5, et
- un module rigide 15 comportant la lentille 6 et l'intermédiaire 7. Le module rigide 15 constitue la partie la plus rigide du projecteur, donc la plus dangereuse pour le piéton.

L'élément de liaison 14 est un élément susceptible de désolidariser l'intermédiaire 7 et le réflecteur 5 en cas de choc. Il a pour rôle de rendre solidaire l'intermédiaire 7 et le réflecteur 5, donc le module rigide 15 et le réflecteur 5, en fonctionnement normal, et d'assurer une rupture du module rigide 15 par rapport au réflecteur 5, en cas de choc.

Dans une variante de l'invention, cet élément de liaison 14 est déformable, ce qui a pour effet de modifier la liaison entre le module rigide 15 et le réflecteur 5. Cet élément de liaison peut être, par exemple, réalisé dans un matériau de type caoutchouc apte à se déformer sous l'effet d'une force. Dans cette variante, en cas de choc, l'élément de liaison 14 se déforme de façon à ce que le module rigide 15 se déplace vers le bas du boîtier 3, sans se détacher complètement du réflecteur 5. On comprend ainsi, qu'en cas d'impact d'un piéton sur le module optique 10, le module rigide 15 se déplace vers le bas, diminuant ainsi la force d'impact.

Dans une autre variante de l'invention, l'élément de liaison 14 est détachable, c'est-à-dire qu'il est destiné à se briser en cas de choc. L'élément de liaison 14 peut être, par exemple, un système de vis/écrou fusible qui se détruit sous l'effet d'une force. Par exemple, sous l'effet du choc, le filet de vis peut devenir lisse et se désolidariser de l'écrou. Cette variante est représentée sur la figure 5. Plus précisément, la figure 5 montre le module rigide 15 après rupture de l'élément de liaison 14. Le module rigide 15 se trouve posé sur la face inférieure du boîtier 3. De cette façon la partie la plus rigide du projecteur, et donc la plus dangereuse pour le piéton, est déplacée au plus bas afin de ne pas constituer un renfort lors du choc. De plus, en accompagnant le piéton dans sa trajectoire, le module rigide absorbe une partie de l'énergie du choc.

Dans une autre variante encore, l'élément de liaison fait partie intégrante de l'intermédiaire, c'est-à-dire qu'il est formé avec l'intermédiaire lors de la fabrication de l'intermédiaire. Par exemple, l'intermédiaire peut être réalisé en matériau plastique, de manière à être frangible lors d'une contrainte dépassant un seuil prédéterminé. Selon un autre exemple, l'intermédiaire comporte des pions reçus dans des ouvertures formées à l'extrémité avant du réflecteur, l'intermédiaire étant fixé sur le réflecteur par bouterollage de ces pions de telle manière que ces pions se brisent lors d'un choc sur la lentille ou l'intermédiaire.

Selon ces exemples, l'intermédiaire ou sa fixation se brise de sorte que la partie avant du module 15 se déplace vers le bas du boîtier 3, diminuant ainsi la force d'impact.

Le second mode de réalisation qui vient d'être décrit peut être combiné avec le premier mode de réalisation de l'invention dans lequel le correcteur est modifiable.

Sur la figure 5, on a représenté le second mode de réalisation associé au premier mode de réalisation. Dans cet exemple, le correcteur est en position de course rentrée lorsque la rupture de l'élément de liaison intervient. Autrement dit, cette figure 5 montre à la fois le correcteur de position 9 et l'élément de liaison 14. On comprend, d'après cette figure 5, que la force d'impact du piéton heurtant le projecteur 2 est amortie tout d'abord par la flexibilité de la glace de protection 4 (arc de cercle P en pointillés fins), puis par le déplacement du module optique 10 produit par le correcteur 9 (arc de cercle P' en pointillés épais), puis par la rupture de l'élément de liaison 14 entraînant la chute du module rigide 15 (arc de cercle P" en trait continu épais).

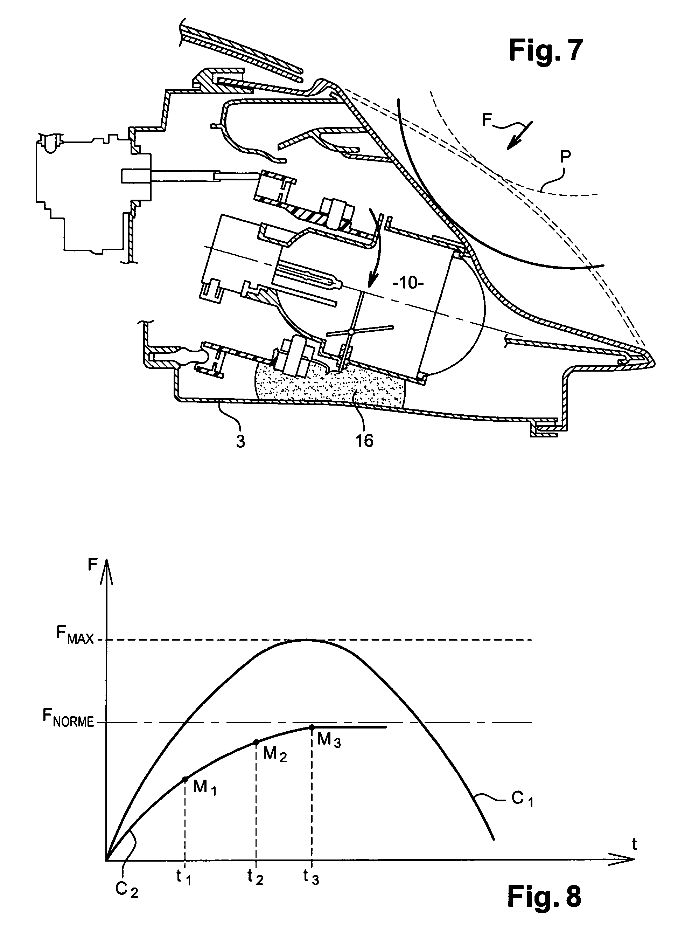

Dans un troisième mode de réalisation de l'invention, le projecteur 2 comporte un bloc de mousse à absorption d'énergie placé sous le module optique. Ce troisième mode de réalisation est représenté sur les figures 6 et 7.

Sur la figure 6, on a représenté le projecteur en fonctionnement normal, c'est-à-dire hors choc. Cette figure 6 montre le bloc de mousse 16 placé sous le module optique 10. Ce bloc de mousse 16 est calibré pour absorber au moins une partie de l'énergie due à la déformation du projecteur, c'est-à-dire au déplacement du module optique 10 ou du module rigide 15 à l'intérieur du projecteur.

Dans une variante, le bloc de mousse 16 peut être un bloc uniforme placé au fond du boîtier 3. Dans une autre variante, représentée sur la figure 6, le bloc de mousse 16 a une forme adaptée au contour extérieur du module optique de façon à être le plus proche possible du module et être en contact avec le module le plus rapidement possible après le choc. Plus le bloc de mousse est épais à l'endroit de la déformation et plus l'absorption d'énergie est grande.

On comprend que l'effet de la rigidité du module rigide est limité tant que le module ne rencontre pas un autre élément rigide, notamment une paroi du boîtier 3. Le bloc de mousse 16 permet de retarder l'instant de cette rencontre.

Dans l'invention, les instants qui séparent l'impact entre la tête du piéton P et le module optique 10 avec l'impact entre le module optique 10 et le boîtier 3 sont utilisés pour absorber une partie de l'énergie de ce choc. Ainsi, les différentes étapes du choc, décrites en relation avec la figure 5, à savoir la souplesse de la glace de protection, le déplacement du module optique par le correcteur de position et le déplacement du module rigide par l'élément de liaison, sont différents moyens qui peuvent être utilisés séparément ou combinés pour retarder l'instant de rencontre du module rigide 15 avec le boîtier 3. Le déplacement du module optique 10 et le déplacement du module rigide 15 peuvent être combinés avec le bloc de mousse 16 pour absorber une plus grande partie encore de l'énergie du choc.

Sur la figure 7, on a représenté le projecteur selon le mode de réalisation de la figure 2, après le choc, c'est-à-dire après déplacement du module optique 10. Sur cette figure 7, on voit que le bloc de mousse 16 est compressé par le module optique 10. Plus précisément, lors du choc du piéton sur le module optique, ce dernier est déplacé vers le bas du projecteur par le correcteur 9 et son déplacement est amorti par le bloc de mousse à absorption d'énergie.

Le projecteur de l'invention permet ainsi d'absorber au moins partiellement l'énergie provenant d'un impact entre un piéton et le projecteur de l'invention. Une première partie de cette énergie est absorbée par la glace de protection du projecteur ; en effet, la glace de protection du projecteur est réalisée dans un matériau polycarbonate apte à se déformer avant de se briser. La glace de protection absorbe donc une partie de l'énergie due à l'impact. Cependant, l'énergie absorbée par la glace de protection ne suffit pas à protéger le piéton, notamment lorsque la glace se brise, laissant le module rigide à portée de la tête du piéton. L'invention propose donc d'utiliser les caractéristiques du projecteur de l'invention pour déplacer le module rigide et/ou le module optique de façon à ce que ces modules absorbent eux aussi une partie de l'énergie du choc. L'absorption de l'énergie du choc peut encore être améliorée au moyen d'une mousse absorbante.

Sur la figure 8, on a représenté des exemples courbes d'énergie obtenue lors d'un choc piéton contre un projecteur classique et contre un projecteur selon l'invention. La courbe C1 montre l'évolution de l'énergie d'un choc piéton contre un projecteur classique. Le pic de la courbe C1 à l'énergie Fmax correspond à l'impact avec le module rigide. On voit que l'énergie maximale admissible selon la norme (Fnorme) est largement dépassée. La courbe C2 montre l'évolution de l'énergie d'un choc contre le projecteur de l'invention. Les points M1, M2, M3 correspondent, respectivement, aux instants t1 où le module optique est déplacé par le correcteur, t2 où le module rigide est déplacé par l'élément de liaison et t3 où le module rigide rencontre le bloc de mousse. On voit que l'énergie du choc est moins intense sur la courbe C2 que sur la courbe C1. En particulier, la courbe C2 ne dépasse jamais l'énergie Fnorme.

## Revendications

1. Projecteur notamment de type elliptique pour véhicule automobile, comportant :
- un boîtier (3) fixé sur le véhicule,
- une glace de protection (4) fermant le boîtier (3),
- un module optique (10) comportant un réflecteur (5), une lentille (6) et un intermédiaire (7) fixé au réflecteur et supportant la lentille, ladite lentille et ledit intermédiaire formant un module (15),
**caractérisé en ce qu'**il comporte des moyens (9, 14, 16) pour absorber au moins partiellement une énergie produite lors d'un choc piéton, par un déplacement d'une partie au moins du module optique (10).

2. Projecteur selon la revendication 1, **caractérisé en ce que** les moyens d'absorption d'énergie comportent un correcteur de position (9) monté entre le boîtier (3) et le module optique (10) pour assurer un déplacement du module optique par rapport au boîtier.

3. Projecteur selon la revendication 2, **caractérisé en ce que** le correcteur de position comporte une tige de réglage fixe par rapport au module optique et mobile par rapport au boîtier.

4. Projecteur selon la revendication 3, **caractérisé en ce que** la tige de réglage est escamotable.

5. Projecteur selon l'une quelconque des revendications 1 à 4, **caractérisé en ce que** les moyens d'absorption d'énergie comportent au moins un élément de liaison (14) monté entre l'intermédiaire (7) et le réflecteur (5) et assurant un déplacement du module (15) par rapport au réflecteur (5).

6. Projecteur selon la revendication 5, **caractérisé en ce que** l'élément de liaison (14) est déformable.

7. Projecteur selon la revendication 5, **caractérisé en ce que** l'élément de liaison (14) est cassable.

8. Projecteur selon l'une des revendications 6 ou 7, **caractérisé en ce que** l'élément de liaison (14) est constitué par l'intermédiaire (7) lui-même.

9. Projecteur selon la revendication 8, **caractérisé en ce que** l'intermédiaire (7) est cassable au niveau de sa fixation au réflecteur (5).

10. Projecteur selon l'une quelconque des revendications 1 à 9, **caractérisé en ce que** les moyens d'absorption d'énergie comportent une mousse (16) à absorption d'énergie placée au moins sous le module rigide.

11. Procédé pour absorber au moins partiellement de l'énergie provenant d'un impact entre un piéton et un projecteur de véhicule, **caractérisé en ce qu'**il comporte les opérations suivantes :
- absorption d'une partie de l'énergie par déformation d'une glace de protection (4) du projecteur,
- absorption d'une partie de l'énergie par déplacement d'au moins une partie d'un module optique (10) dans le projecteur, et
- absorption d'une partie de l'énergie au moyen d'une mousse absorbante (16).

12. Véhicule automobile, **caractérisé en ce qu'**il comporte un projecteur selon l'une quelconque des revendications 1 à 10.
